# FASCICULE DE BREVET EUROPEEN

(11) **EP 3 243 643 B1**
(45) Date de publication et mention de la délivrance du brevet: **26.12.2018**
(21) Numéro de dépôt: 17167607.5
(22) Date de dépôt: 21.04.2017
(51) Int. Cl.: B29C 71/00, C08J 7/14, B29C 67/00

(54) **PROCÉDÉ DE TRAITEMENT DE SURFACE POUR OBJETS**
VERFAHREN ZUR OBERFLÄCHENBEARBEITUNG FÜR GEGENSTÄNDE
SURFACE TREATMENT METHOD FOR OBJECTS

(30) Priorité: 10.05.2016 FR 1654150
(43) Date de publication de la demande: 15.11.2017
(73) Titulaire: Sculpteo, 94800 Villejuif (FR)
(72) Inventeur: MOREAU, Clément, 92140 CLAMART (FR); COMTE, Myrtille, 78600 Maisons-Laffitte (FR)
(74) Mandataire: Ipside

(56) Documents cités:
- FR-A- 772 239
- FR-A1- 3 022 250

## Description

### Domaine de l'invention

La présente invention concerne le domaine des procédés de traitement de surface pour objets, notamment pour objets issus de la fabrication additive, également appelée « impression 3D ».

La présente invention se rapporte plus particulièrement à un procédé de traitement de surface pour objets, par exemple en polyamide, et notamment issus de techniques de fabrication additive.

### Etat de la technique

La fabrication additive, également appelée impression 3D, permet de créer des objets strate par strate sans utiliser de moules. Elle est notamment employée pour la production rapide de pièces en plastique.

Les objets ainsi produits présentent une surface plus rugueuse que ceux obtenus par injection plastique. Dans certains cas particuliers, lors de leur mise en forme, leur surface est en contact avec des grains de poudre plastique ou de l'air plutôt qu'avec un moule lisse.

Ce rendu est dérangeant pour certaines applications : un objet peut par exemple être jugé visuellement ou tactilement peu attractif à cause de cet effet.

Plusieurs solutions existent actuellement, notamment le polissage à l'aide d'abrasifs, l'application de vernis/résine ou encore la dissolution chimique ou thermo-chimique de la surface de l'objet suivie d'une resolidification.

Actuellement, cette dernière méthode consiste à laisser l'objet au contact de vapeurs d'un solvant ou d'un mélange de solvants puis le retirer lorsque le rendu est jugé acceptable. Le duo polymère/solvant le plus répandu est l'ABS (acrylonitrile butadiène styrène) traité aux vapeurs d'acétone, mais d'autres combinaisons ont été proposées.

Un des polymères employés dans l'impression 3D, le polyamide, possède une bonne résistance chimique globale rendant difficile sa dissolution par solvant vaporisé à température ambiante. Il résiste par exemple totalement à l'acétone. Une montée en température peut favoriser le processus mais risque de poser des problèmes de sécurité dépendants de la nature des solvants employés.

Des exemples de procédés de traitement de surface d'un objet sont donnés par les documents FR 3 022 250 A1 et FR 772 239 A.

### Exposé de l'invention

La présente invention entend remédier aux inconvénients de l'art antérieur en proposant un procédé basé sur une trempe dans une solution acide puis une montée en température pour traiter des objets, par exemple en polyamide, notamment mais non exclusivement des objets issus d'un procédé de fabrication additive.

A cet effet, la présente invention concerne, dans son acception la plus générale, un procédé de traitement de surface d'un objet, comportant les étapes suivantes :
- Trempe dudit objet dans une solution comportant un acide concentré ou un mélange d'acides concentrés, et possédant un pH compris entre 0 et 2, afin d'imprégner la surface dudit objet ;
- Retrait dudit objet de ladite solution acide ;
- Chauffage dudit objet à une température comprise entre 140°C et 180°C, jusqu'à l'obtention de la fusion de la surface ; et
- Refroidissement dudit objet.

Le procédé selon la présente invention présente les avantages techniques suivants :
- Ce traitement résout la problématique de la résistance chimique du polyamide : de par sa nature moléculaire, ce dernier est sensible aux acides (hydrolyse catalysée).
- La surface activée par l'acide aura une température de fusion plus basse que le coeur de l'objet, permettant ainsi de conserver la forme de l'objet durant le traitement.
- Le cycle de fusion/solidification permet à la surface de se réorganiser, gommant les creux et bosses sous l'effet de la tension de surface et résultant en un lissage de la surface.
- L'agent chimique est sous forme liquide et est appliqué sur l'objet à température ambiante, ce qui permet une certaine facilité de mise en place et réduit les risques liés à la sécurité.

De préférence, ladite solution acide possède un pH compris entre 0 et 1.

Avantageusement, ledit acide est un acide minéral.

Selon un mode de réalisation, ledit acide est compris dans le groupe suivant : acide sulfurique, acide nitrique, acide phosphorique et acide chlorhydrique.

De préférence, le chauffage dudit objet est réalisé à une température comprise entre 155°C et 170°C.

Avantageusement, ledit procédé comporte en outre une étape d'élimination du liquide en surplus.

Selon une variante, l'élimination du liquide en surplus est réalisée en appliquant une force centrifuge audit objet.

Selon une autre variante, l'élimination du liquide en surplus est réalisée en faisant vibrer ledit objet.

De préférence, ladite étape de chauffage est mise en oeuvre en utilisant un système chauffant à convection forcée.

Ceci assure une meilleure homogénéité de la chauffe.

Avantageusement, ladite solution de trempe comporte en outre des additifs.

Selon un mode de mise en oeuvre, lesdits additifs sont déposés sur la surface de l'objet lors de ladite étape de trempe.

Ceci confère des propriétés additionnelles à la surface de l'objet.

Selon un mode de réalisation, ledit procédé est appliqué à un objet issu de techniques de fabrication additive.

Selon un mode de réalisation, ledit procédé est appliqué à un objet en polyamide.

### Brève description des dessins

On comprendra mieux l'invention à l'aide de la description, faite ci-après à titre purement explicatif, d'un mode de réalisation de l'invention, en référence aux Figures dans lesquelles :

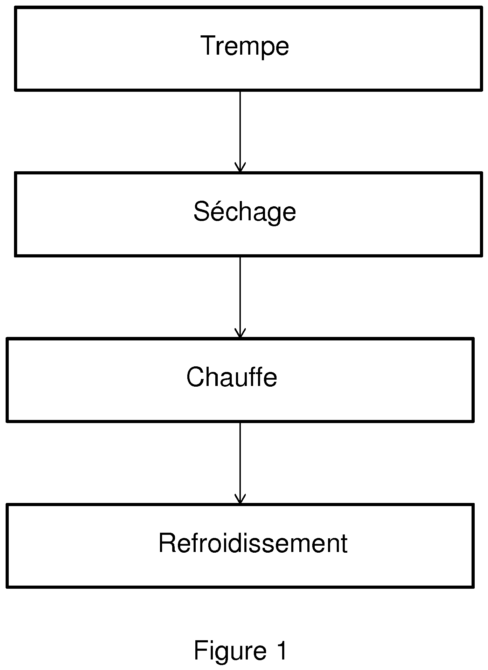

- La Figure 1 illustre les différentes étapes du procédé selon la présente invention.

### Description détaillée des modes de réalisation de l'invention

La présente invention se rapporte à un procédé de traitement de surface d'un objet, par exemple en polyamide, notamment mais non exclusivement issu de techniques de fabrication additive.

Le procédé selon la présente invention comporte les étapes suivantes :
- Trempe de l'objet dans une solution comportant un acide concentré ou un mélange d'acides concentrés, et possédant un pH compris entre 0 et 2, afin d'imprégner la surface dudit objet ;
- Retrait de l'objet de ladite solution acide ;
- Chauffage de l'objet à une température comprise entre 140°C et 180°C, jusqu'à l'obtention de la fusion de la surface ; et
- Refroidissement de l'objet.

La Figure 1 illustre les différentes étapes du procédé selon la présente invention : trempe, séchage, chauffe et refroidissement, ces différentes étapes se rapportant à l'objet, qui, dans un mode de réalisation, est issu de techniques de fabrication additive.

Dans un mode de réalisation, ledit procédé est appliqué à un objet en polyamide.

Dans un mode de réalisation, la solution acide possède un pH compris entre 0 et 1.

Dans un mode de réalisation, l'acide est un acide minéral, et, dans un mode de réalisation, l'acide est compris dans le groupe suivant : acide sulfurique, acide nitrique, acide phosphorique et acide chlorhydrique.

Dans un mode de réalisation, le chauffage de l'objet est réalisé à une température comprise entre 155°C et 170°C.

Dans un mode de réalisation, le procédé selon la présente invention comporte en outre une étape d'élimination du liquide en surplus. Selon une variante, l'élimination du liquide en surplus est réalisée en appliquant une force centrifuge à l'objet, et selon une autre variante, l'élimination du liquide en surplus est réalisée en faisant vibrer l'objet.

Dans un mode de réalisation, l'étape de chauffage est mise en oeuvre en utilisant un système chauffant à convection forcée, ceci assurant une meilleure homogénéité de la chauffe.

Dans un mode de réalisation, la solution de trempe comporte en outre des additifs, et selon un mode de mise en oeuvre, les additifs sont déposés sur la surface de l'objet lors de l'étape de trempe, ceci conférant des propriétés additionnelles à la surface de l'objet.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de traitement de surface d'un objet, **caractérisé en ce qu'**il comporte les étapes suivantes :
• Trempe dudit objet dans une solution comportant un acide concentré ou un mélange d'acides concentrés, et possédant un pH compris entre 0 et 2, afin d'imprégner la surface dudit objet ;
• Retrait dudit objet de ladite solution acide ;
• Chauffage dudit objet à une température comprise entre 140°C et 180°C, jusqu'à l'obtention de la fusion de la surface ; et
• Refroidissement dudit objet.

2. Procédé de traitement de surface d'un objet selon la revendication 1, **caractérisé en ce que** ladite solution acide possède un pH compris entre 0 et 1.

3. Procédé de traitement de surface d'un objet selon la revendication 1 ou 2, **caractérisé en ce que** ledit acide est un acide minéral.

4. Procédé de traitement de surface d'un objet selon l'une des revendications 1, 2 ou 3, **caractérisé en ce que** ledit acide est compris dans le groupe suivant : acide sulfurique, acide nitrique, acide phosphorique et acide chlorhydrique.

5. Procédé de traitement de surface d'un objet selon l'une des revendications précédentes, **caractérisé en ce que** le chauffage dudit objet est réalisé à une température comprise entre 155°C et 170°C.

6. Procédé de traitement de surface d'un objet selon l'une des revendications précédentes, **caractérisé en ce qu'**il comporte en outre une étape d'élimination du liquide en surplus.

7. Procédé de traitement de surface d'un objet selon la revendication 6, **caractérisé en ce que** l'élimination du liquide en surplus est réalisée en appliquant une force centrifuge audit objet.

8. Procédé de traitement de surface d'un objet selon la revendication 6, **caractérisé en ce que** l'élimination du liquide en surplus est réalisée en faisant vibrer ledit objet.

9. Procédé de traitement de surface d'un objet selon l'une des revendications précédentes, **caractérisé en ce que** ladite étape de chauffage est mise en oeuvre en utilisant un système chauffant à convection forcée.

10. Procédé de traitement de surface d'un objet selon l'une des revendications précédentes, **caractérisé en ce que** ladite solution de trempe comporte en outre des additifs.

11. Procédé de traitement de surface d'un objet selon la revendication 10, **caractérisé en ce que** lesdits additifs sont déposés sur la surface de l'objet lors de ladite étape de trempe.

12. Procédé de traitement de surface d'un objet selon l'une des revendications précédentes, **caractérisé en ce qu'**il est appliqué à un objet issu de techniques de fabrication additive.

13. Procédé de traitement de surface d'un objet selon l'une des revendications précédentes, **caractérisé en ce qu'**il est appliqué à un objet en polyamide.

## Patentansprüche

1. Verfahren zur Oberflächenbehandlung eines Objekts, **dadurch gekennzeichnet, dass** es die folgenden Schritte umfasst:
• Eintauchen des Objekts in eine Lösung, die eine konzentrierte Säure oder ein Gemisch konzentrierter Säuren umfasst und einen pH-Wert im Bereich zwischen 0 und 2 besitzt, um die Oberfläche des Objekts zu imprägnieren;
• Herausnehmen des Objekts aus der Säurelösung;
• Erhitzen des Objekts auf eine Temperatur im Bereich zwischen 140 °C und 180 °C bis zum Erreichen des Schmelzens der Oberfläche; und
• Abkühlen des Objekts.

2. Verfahren zur Oberflächenbehandlung eines Objekts nach Anspruch 1, **dadurch gekennzeichnet, dass** die Säurelösung einen pH-Wert im Bereich zwischen 0 und 1 besitzt.

3. Verfahren zur Oberflächenbehandlung eines Objekts nach Anspruch 1 oder 2, **dadurch gekennzeichnet, dass** die Säure eine anorganische Säure ist.

4. Verfahren zur Oberflächenbehandlung eines Objekts nach einem der Ansprüche 1, 2 oder 3, **dadurch gekennzeichnet, dass** die Säure in der folgenden Gruppe umfasst ist: Schwefelsäure, Salpetersäure, Phosphorsäure und Chlorwasserstoffsäure.

5. Verfahren zur Oberflächenbehandlung eines Objekts nach einem der vorstehenden Ansprüche, **dadurch gekennzeichnet, dass** das Erhitzen des Objekts auf einer Temperatur im Bereich zwischen 155 °C und 170 °C ausgeführt wird.

6. Verfahren zur Oberflächenbehandlung eines Objekts nach einem der vorstehenden Ansprüche, **dadurch gekennzeichnet, dass** es weiter einen Schritt des Entfernens der überschüssigen Flüssigkeit umfasst.

7. Verfahren zur Oberflächenbehandlung eines Objekts nach Anspruch 6, **dadurch gekennzeichnet, dass** das Entfernen der überschüssigen Flüssigkeit unter Anwendung einer Zentrifugalkraft auf das Objekt ausgeführt wird.

8. Verfahren zur Oberflächenbehandlung eines Objekts nach Anspruch 6, **dadurch gekennzeichnet, dass** das Entfernen der überschüssigen Flüssigkeit unter Vibrierenlassen des Objekts ausgeführt wird.

9. Verfahren zur Oberflächenbehandlung eines Objekts nach einem der vorstehenden Ansprüche, **dadurch gekennzeichnet, dass** der Schritt des Erhitzens unter Verwendung eines Heizsystems mit Zwangskonvektion umgesetzt wird.

10. Verfahren zur Oberflächenbehandlung eines Objekts nach einem der vorstehenden Ansprüche, **dadurch gekennzeichnet, dass** die Eintauchlösung weiter Zusatzstoffe umfasst.

11. Verfahren zur Oberflächenbehandlung eines Objekts nach Anspruch 10, **dadurch gekennzeichnet, dass** die Zusatzstoffe beim Schritt des Eintauchens auf die Oberfläche des Objekts aufgebracht werden.

12. Verfahren zur Oberflächenbehandlung eines Objekts nach einem der vorstehenden Ansprüche, **dadurch gekennzeichnet, dass** es auf ein Objekt angewendet wird, das aus 3D-Drucktechniken hervorgegangen ist.

13. Verfahren zur Oberflächenbehandlung eines Objekts nach einem der vorstehenden Ansprüche, **dadurch gekennzeichnet, dass** es auf ein Objekt aus Polyamid angewendet wird.

## Claims

1. Method for the surface treatment of an object, **characterised in that** it comprises the following steps:
• soaking said object in a solution comprising a concentrated acid or a mixture of concentrated acids, and having a pH of between 0 and 2, in order to impregnate the surface of said object;
• removing said object from said acid solution;
• heating said object at a temperature between 140°C and 180°C, until melting of the surface is obtained; and
• cooling said object.

2. Method for the surface treatment of an object according to claim 1, **characterised in that** said acid solution has a pH of between 0 and 1.

3. Method for the surface treatment of an object according to claim 1 or claim 2, **characterised in that** said acid is a mineral acid.

4. Method for the surface treatment of an object according to any of claims 1, 2 or 3, **characterised in that** said acid is included in the following group: sulfuric acid, nitric acid, phosphoric acid and hydrochloric acid.

5. Method for the surface treatment of an object according to any of the preceding claims, **characterised in that** the heating of said object is carried out at a temperature between 155°C and 170°C.

6. Method for the surface treatment of an object according to any of the preceding claims, **characterised in that** it further comprises a step of eliminating the surplus liquid.

7. Method for the surface treatment of an object according to claim 6, **characterised in that** the elimination of the surface liquid is carried out by applying a centrifugal force to said object.

8. Method for the surface treatment of an object according to claim 6, **characterised in that** the elimination of the surface liquid is carried out by vibrating said object.

9. Method for the surface treatment of an object according to any of the preceding claims, **characterised in that** said heating step is implemented using a forced convention heating system.

10. Method for the surface treatment of an object according to any of the preceding claims, **characterised in that** said soaking solution further comprises additives.

11. Method for the surface treatment of an object according to claim 10, **characterised in that** said additives are deposited on the surface of the object during said soaking step.

12. Method for the surface treatment of an object according to any of the preceding claims, **characterised in that** it is applied to an object resulting from additive manufacturing techniques.

13. Method for the surface treatment of an object according to any of the preceding claims, **characterised in that** it is applied to a polyamide object.
